# EUROPEAN PATENT APPLICATION

(11) **EP 2 610 455 A1**
(43) Date of publication of application: **03.07.2013**
(21) Application number: 11819975.1
(22) Date of filing: 25.08.2011
(51) Int. Cl.: F01N 3/08, B01D 53/94, B63H 21/32, B63J 3/02, F01N 3/24

(54) **MARINE VESSIL DENITRATION SYSTEM, MARINE VESSEL EQUIPPED WITH SAME, AND CONTROL METHOD FOR MARINE VESSEL DENITRATION SYSTEM**

(30) Priority: 26.08.2010 JP 2010189503
(71) Applicant: Mitsubishi Heavy Industries, Ltd., Tokyo 108-8215 (JP)
(72) Inventor: MURATA, Satoru, Tokyo 108-8215 (JP); HIRAOKA, Naohiro, Tokyo 108-8215 (JP)
(74) Representative: HOFFMANN EITLE
(86) International application number: PCT/JP2011/069128
(87) International publication number: WO 2012/026512

(57) **Abstract**

With the invention, electrical energy required when producing ammonia for use as a reducing agent in denitration is supplied with low energy consumption. Provided are an ammonia producing device (2) that includes a hydrogen producing unit (81) for producing hydrogen from water and a nitrogen producing unit (83) for producing nitrogen from air, and that produces ammonia from the hydrogen produced by the hydrogen producing unit (81) and the nitrogen produced by the nitrogen producing unit (83), and an SCR catalyst unit (4) that is provided in an exhaust gas passage of a main engine (3) for marine vessel propulsion and performs denitration of the exhaust gas with the ammonia produced by the ammonia producing device (2). A power management system (72) controls, based on a load of the main engine (3), electric power output of an electric power generator that generates electric power using exhaust energy from the main engine (3). At least a portion of the electric power controlled by the power management system (72) is supplied to the ammonia producing device (2).

## Description

### {Technical Field}

The present invention relates to a marine vessel denitration system mounted on a marine vessel and suitably used, for example, for denitration of exhaust gas from a diesel engine, to a marine vessel equipped with the same, and to a control method for a marine vessel denitration system.

### {Background Art}

Denitration equipment is mounted on marine vessels to remove nitrogen oxide (NOx) produced by the diesel engine (main engine) used for marine vessel propulsion.
In the below-mentioned Patent Document 1, an invention which enables production of ammonia for use as a reducing agent of a denitration catalyst on a marine vessel is disclosed. Since the ammonia can be produced on the marine vessel, there is no need to transport liquid ammonia onto the marine vessel and store the liquid ammonia on the marine vessel. Moreover, liquid ammonia is handled as a hazardous material and so, if used, special storage equipment such as a leak detection sensor and double walled piping must be installed. However, if as much ammonia as required can be produced on the marine vessel, there is no need to install the special storage equipment.

### {Citation List}

### {Patent Literature}

{PTL 1}
   Japanese Unexamined Patent Application Publication No. H11-292531

### {Summary of Invention}

### {Technical Problem}

To produce ammonia on the marine vessel, electrical energy is required to drive transfer pumps, perform electrolysis of water and the like. In the above-mentioned Patent Document 1, use of electric power from a diesel engine electric power generator which is an auxiliary engine is described.
However, generally speaking, because diesel engine electric power generators have a lower thermal efficiency than the main engine, when the electric power for producing ammonia is obtained from a diesel engine electric power generator, more energy is wasted. Hence, from the point of view of saving energy, use of the diesel engine electric power generator is not favorable.

The amount of ammonia required for denitration of exhaust gas changes constantly depending on a load of the main engine of the marine vessel. Thus, it is necessary to produce the exact amount of ammonia required, neither too much nor too little. Moreover, the electric power for producing the ammonia must be supplied appropriately in accordance with the variation of the required amount of ammonia.

The present invention was conceived upon consideration of the above circumstances and has an objective of providing a marine vessel denitration system, a marine vessel equipped with the same and a control method for a marine vessel denitration system, the marine vessel denitration system being capable of supplying electrical energy required when producing ammonia for use as a reducing agent for denitration while keeping energy consumption low.
The present invention has a further objective of providing a marine vessel denitration system, a marine vessel equipped with the same and a control method for a marine vessel denitration system, the marine vessel denitration system being capable of supplying the exact amount of ammonia required for denitration, neither too much nor too little, and appropriately supplying electric power for producing the ammonia.

### {Solution to Problem}

To solve the above-described problem, the marine vessel denitration system of the present invention employs the following means.
Specifically, the marine vessel denitration system according to a first aspect of the present invention includes: an ammonia producing device that has a hydrogen producing unit for producing hydrogen from water and a nitrogen producing unit for producing nitrogen from air, and that produces ammonia from the hydrogen produced by the hydrogen producing unit and the nitrogen produced by the nitrogen producing unit; and a denitration catalyst unit that is provided in an exhaust gas passage of a main engine for marine vessel propulsion and performs denitration of the exhaust gas with the ammonia produced by the ammonia producing device. The marine vessel denitration system includes an electric power output control unit that controls, based on a load of the main engine, electric power output of an electric power generator that generates electric power using exhaust energy from the main engine, wherein at least a portion of the electric power controlled by the electric power output control unit is used in the ammonia producing device.

The ammonia producing device has the hydrogen producing unit that produces hydrogen from water and the nitrogen producing unit that produces nitrogen from air, and produces ammonia from the hydrogen and the nitrogen produced by the hydrogen producing unit and the nitrogen producing unit, respectively. Thus, the ammonia can be produced on the marine vessel using water and air as raw materials, and there is no need to provide space on the marine vessel for storing reducing agents such as liquid ammonia (aqueous ammonia solution or the like) or urea. Hence, the marine vessel denitration system can be installed on the marine vessel without taking a large space.
The electric power output control unit controls, based on a load of the main engine, electric power output of an electric power generator that generates electric power using exhaust energy from the main engine. Hence, exhaust energy can be appropriately recovered as electric power output in accordance with the load of the main engine. The electric power output recovered from the exhaust energy from the main engine is then used in the ammonia producing device, and the ammonia producing device can therefore be operated with a low energy consumption. Thus, the exhaust energy from the main engine can be used effectively and so it is possible to avoid increasing the capacity or a number of separately provided electric power generating auxiliary engines, such as diesel engine electric power generators.

Further, in the first aspect, the marine vessel denitration system may include a calculating means for a target ammonia production amount that calculates a target ammonia production amount to be produced by the ammonia producing device in accordance with the load of the main engine.

The ammonia production amount required for denitration varies depending on the load of the main engine, and so a target ammonia production amount is calculated based on the load of the main engine. As a result, it is possible to produce an appropriate amount of ammonia in accordance with the load of the main engine at any time.

Further, the marine vessel denitration system with a configuration including the calculating means for a target ammonia production amount may include a detecting means for an ammonia production amount that detects the ammonia production amount produced by the ammonia producing device, and the detected ammonia production amount detected by the detecting means for an ammonia production amount and the target ammonia production amount may be used to perform feedback control of the ammonia production amount produced by the ammonia producing device.

Here, the detected ammonia production amount is used to perform feedback control of the ammonia production amount such that the ammonia production amount matches the target ammonia production amount. As a result, it is possible to produce an appropriate amount of ammonia at any time. Moreover, since an excessive amount of ammonia is never produced, there is no wasteful consumption of electric power.

Further, in the marine vessel denitration system with a configuration including the detecting means for an ammonia production amount, the detecting means for an ammonia production amount may include at least one of an ammonia flow rate sensor that detects a flow rate of ammonia produced by the ammonia producing device, an upstream side ammonia density sensor that detects an ammonia density on an upstream side of the denitration catalyst unit, and a downstream side ammonia density sensor that detects an ammonia density on a downstream side of the denitration catalyst unit.

The flow rate of the produced ammonia is found using the ammonia flow rate sensor. The density of the ammonia supplied to the denitration catalyst unit is found using the upstream side ammonia density sensor. The density of the ammonia after consumption by the denitration catalyst unit is found using the downstream side ammonia density sensor. The ammonia production amount can be found by using the above-described sensors independently or in an appropriate combination.

Further, the marine vessel denitration system with a configuration including the calculating means for a target ammonia production amount preferably further includes a required electric power calculating means for an ammonia producing device that calculates a required electric power for the ammonia producing device from the target ammonia production amount, and the electric power output control unit preferably uses the required electric power determined by the required electric power calculating means for an ammonia producing device to perform feedforward control of the electric power output.

The required electric power for the ammonia producing device is determined in advance from the target ammonia production amount and feedforward control is performed on the electric power output to ensure that the electric power output satisfies the required electric power. Hence, a stable electric power supply can be provided.

Further, the marine vessel denitration system according to the first aspect preferably includes an electric heater that heats exhaust gas being guided to the denitration catalyst unit, and at least a portion of the electric power controlled by the electric power output control unit is used in the electric heater.

In a selective catalytic reduction (SCR) catalyst, which is the method mainly applied in denitration catalyst units, the risk of deterioration increases as the exhaust gas temperature decreases. The exhaust gas temperature is therefore increased using the electric heater to prevent deteriorating of the denitration catalyst unit.
At least a portion of the electric power controlled by the electric power output control unit is supplied to the electric heater. In other words, electric power generated from the heat recovered from the exhaust gas is used and the electric heater can therefore be operated with low energy consumption.

Further, in the marine vessel denitration system according to the first aspect, an electric power generator connected to a turbocharger generating electric power by obtaining rotation output of an exhaust turbocharger of the main engine is preferably used as the electric power generator.

One known example of a turbocharger including an electric power generator connected to the turbocharger that generates electric power by obtaining rotation output of an exhaust turbocharger of the main engine is a hybrid turbocharger. Here, the electric power generator connected to turbocharger is used as the electric power generator for supplying electric power to the ammonia producing device. As a result, the exhaust energy from the main engine can be used effectively.

Further, in the marine vessel denitration system according to the first aspect, an electric power generator connected to a power turbine that generates electric power with an electric power turbine driven by the exhaust gas from the main engine is preferably used as the electric power generator.

Here, the output electric power from the electric power generator connected to the power turbine that generates electric power with the power turbine driven by the exhaust gas from the main engine is used in the ammonia producing device. As a result, the exhaust energy from the main engine can be used effectively.

Further, in the marine vessel denitration system according to the first aspect, an electric power generator connected to a steam turbine that generates electric power using a steam turbine driven by steam generated with an exhaust gas boiler utilizing the exhaust gas from the main engine is preferably used as the electric power generator.

Here, the electric power output from the electric power generator connected to the steam turbine that generates electric power using a steam turbine driven by steam generated with the exhaust gas boiler utilizing the exhaust gas from the main engine is used in the ammonia producing device. As a result, the exhaust energy from the main engine can be used effectively.

Further, in the marine vessel denitration system according to the first aspect, an electric power generator connected to a combined turbine that generates electric power using the power turbine driven by the exhaust gas from the main engine and the steam turbine driven by steam generated with the exhaust gas boiler utilizing the exhaust gas from the main engine is preferably used as the electric power generator.

In the electric power generator connected to the combined turbine, different types (heterogeneous) turbines such as a power turbine and a steam turbine are connected. When the electric power generator connected to the combined turbine is used, electric power is generated using both the electric power turbine driven by the exhaust gas from the main engine and the steam turbine driven by steam generated with the exhaust gas boiler utilizing the exhaust gas from the main engine. Hence, the exhaust energy from the main engine can be used more effectively.

Further, in the marine vessel denitration system according to the first aspect, an electric power generator connected to a heat transmitting medium turbine that generates electric power using a turbine driven by a vaporized heating medium is preferably used as the electric power generator, the heating medium being vaporized through heat exchange with heated water, and the heated water being heated by heat exchange with exhaust gas and/or cooling water of a jacket or an air cooler of the main engine.
Systems using alternative CFCs with a boiling point lower than water (such as R-245fa or R-134a), or organic heating media such as pentane or butane are well-known as the heating medium. Such systems are known as the Rankin cycle.

Further, the marine vessel denitration system according to the first aspect preferably includes an exhaust turbocharger driven by the exhaust gas from the main engine, and the exhaust turbocharger is preferably of variable capacity.

Use of a variable capacity turbocharger allows operation under appropriate conditions in accordance with the scavenging air pressure (such as conditions under which fuel consumption rate is optimal). Further, when the marine vessel is operating outside areas subject to strict regulations on NOx in exhaust gas (Emission Control Area (ECA)), electric power for the ammonia producing device is not required. Hence, the marine vessel can be operated with conditions selected so that the fuel consumption rate is optimal by reducing required electric power.
Examples of such an exhaust turbocharger with variable capacity include a variable nozzle turbocharger such as a variable geometry (VG) turbo or the like, a turbocharger in which a flow area of an exhaust gas passage leading to a fixed turbine nozzle changes, and a turbocharger system including a plurality of turbochargers of differing capacities with the number of the turbochargers being operated being variable.

A marine vessel according to a second aspect of the present invention includes a main engine for marine vessel propulsion and any one of the above-described marine vessel denitration systems.

Since the marine vessel includes one of the above-described marine vessel denitration systems, it is possible to provide a marine vessel capable of supplying the required electrical energy when producing ammonia as a reducing agent for denitration, with a low energy consumption.

A control method for a marine vessel denitration system according to a third aspect of the present invention for controlling a marine vessel denitration system including an ammonia producing device that has a hydrogen producing unit that produces hydrogen from water and a nitrogen producing unit that produces nitrogen from air, and that produces ammonia from the hydrogen produced by the hydrogen producing unit and the nitrogen produced by the nitrogen producing unit, and a denitration catalyst unit that is provided in an exhaust gas passage of a main engine for marine vessel propulsion and performs denitration of the exhaust gas with the ammonia produced by the ammonia producing device includes: controlling, based on a load of the main engine, electric power output of an electric power generator that generates electric power using exhaust energy from the main engine; and supplying at least a portion of the electric power output to the ammonia producing device.

The ammonia producing device includes the hydrogen producing unit that produces hydrogen from water and the nitrogen producing unit that produces nitrogen from air, and produces ammonia from the hydrogen and the nitrogen produced by the hydrogen producing unit and the nitrogen producing unit, respectively. Thus, the ammonia can be produced on the marine vessel using water and air as raw materials, and there is no need to provide space on the marine vessel for storing reducing agents such as liquid ammonia (e.g., aqueous ammonia solution or the like) or urea. Hence, the marine vessel denitration system can be installed on the marine vessel without ensuring a large space.
The electric power output of the electric power generator that generates electric power using exhaust energy from the main engine is controlled based on a load of the main engine. Hence, exhaust energy can be appropriately recovered as electric power output in accordance with the load of the main engine. The electric power output recovered from the exhaust energy from the main engine is then used in the ammonia producing device, and the ammonia producing device can therefore be operated with a low energy consumption. Thus, the exhaust energy from the main engine can be used effectively and it is possible to avoid increasing the capacity or a number of separately provided electric power generating auxiliary engines, such as diesel engine electric power generators.

### {Advantageous Effects of Invention}

According to the present invention, it is possible to supply the electrical energy required for producing ammonia as a reducing agent for denitration with a low energy consumption.
According to the present invention, it is possible to appropriately supply the ammonia required for denitration, neither too much nor too little, and to appropriately supply electric power for ammonia production.

### {Brief Description of Drawings}

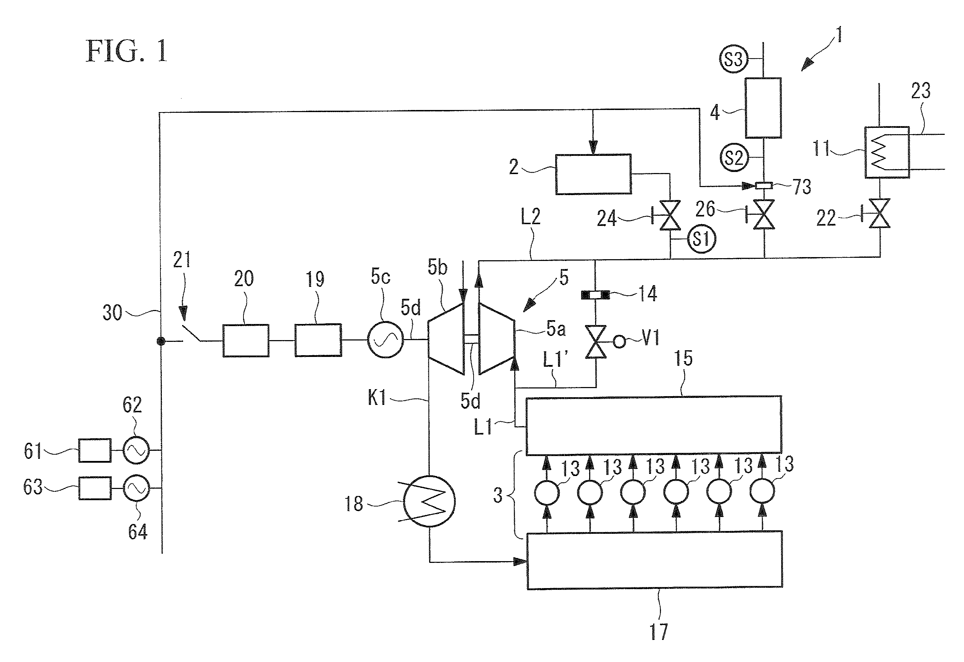

{Fig. 1}
   FIG. 1 is a schematic view illustrating a configuration surrounding a main engine where a marine vessel denitration system according to a first embodiment of the present invention is provided.
{Fig. 2}
   FIG. 2 is a schematic view illustrating an overview of an ammonia producing device depicted in FIG. 1.
{Fig. 3}
   FIG. 3 is a block diagram illustrating a control unit for controlling the marine vessel denitration system of FIG. 1.
{Fig. 4}
   FIG. 4 shows a graph illustrating ammonia production amount plotted against load of the main engine.
{Fig. 5}
   FIG. 5 is a mapping for the first embodiment, showing electric power generation amount plotted against load of the main engine.
{Fig. 6}
   FIG. 6 is a block diagram illustrating feedback control of the ammonia production amount.
{Fig. 7}
   FIG. 7 is a block diagram illustrating feedforward control of the electric power generation amount.
{Fig. 8}
   FIG. 8 is a schematic view illustrating a configuration surrounding a main engine where a marine vessel denitration system according to a second embodiment of the present invention is provided.
{Fig. 9}
   FIG. 9 is a block diagram illustrating a control unit for controlling the marine vessel denitration system of FIG. 8.
{Fig. 10}
   FIG. 10 is a mapping for the second embodiment, showing electric power generation amount plotted against load of the main engine.
{Fig. 11}
   FIG. 11 is a schematic view illustrating a configuration surrounding a main engine where a marine vessel denitration system according to a third embodiment of the present invention is provided.
{Fig. 12}
   FIG. 12 is a block diagram illustrating a control unit for controlling the marine vessel denitration system of FIG. 11.
{Fig. 13}
   FIG. 13 is a mapping for the third embodiment, showing electric power generation amount plotted against load of the main engine.
{Fig. 14}
   FIG. 14 is a schematic view illustrating a configuration surrounding a main engine where a marine vessel denitration system according to a fourth embodiment of the present invention is provided.
{Fig. 15}
   FIG. 15 is a block diagram illustrating a control unit for controlling the marine vessel denitration system of FIG. 14.
{Fig. 16}
   FIG. 16 is a mapping for the fourth embodiment, showing electric power generation amount plotted against load of the main engine.
{Fig. 17}
   FIG. 17 is a schematic view illustrating a marine vessel denitration system according to a fifth embodiment of the present invention.
{Fig. 18}
   FIG. 18 is a block diagram illustrating a control unit for controlling the marine vessel denitration system of FIG. 17.
{Fig. 19}
   FIG. 19 is a mapping for the fifth embodiment, showing electric power generation amount plotted against load of the main engine.

### {Description of Embodiments}

Next, embodiments according to the present invention will be described while referring to the drawings.

### (First Embodiment)

A first embodiment of the present invention will be described below using FIG. 1.
FIG. 1 schematically illustrates a configuration surrounding a main engine 3 where a marine vessel denitration system 1 according to this embodiment is provided.
The marine vessel is provided with the main engine (such as a diesel engine) 3 for propulsion of the marine vessel, a denitration system 1 for denitrating exhaust gas from the main engine 3, a hybrid turbocharger 5 driven by exhaust gas from the main engine 3, and an exhaust gas economizer (exhaust gas boiler) 11 that generates steam using the exhaust gas from the main engine 3.

Output from the main engine 3 is connected directly or indirectly to a screw propeller via a propeller shaft. An exhaust port of each cylinder units 13 of the main engine 3 is connected to an exhaust manifold 15, which forms an exhaust gas collection pipe. The exhaust manifold 15 is connected to an inlet side of a turbine unit 5a of the hybrid turbocharger 5 via a first exhaust pipe L1.

An intake port of each cylinder unit 13 is connected to an intake manifold 17. The intake manifold 17 is connected to a compressor unit 5b of the hybrid turbocharger 5 via an intake pipe K1. An air cooler (intercooler) 18 is installed in the intake pipe K1.

The hybrid turbocharger 5 includes the turbine unit 5a, the compressor unit 5b, and a hybrid electric power generator motor (electric power generator connected to the turbocharger) 5c. The turbine unit 5a, the compressor unit 5b, and the hybrid electric power generator motor 5c are coupled by a same rotating shaft 5d.
The hybrid electric power generator motor 5c generates electric power using rotation output from the turbine unit 5a and assists rotation of the compressor unit 5b by obtaining electric power from a marine vessel electric power system 30. Provided between the hybrid electric power generator motor 5c and the marine vessel system 30 are, in order from the hybrid electric power generator motor 5c side, a converter 19 that converts alternating-current power to direct-current power, an inverter 20 that converts direct-current power to alternating-current power and an on/off switch 21.
Electric power generated by the hybrid electric power generator motor 5c is supplied to an ammonia producing device 2 as described below.
Note that the electric power generated by the hybrid electric power generator motor 5c may, after being converted to direct-current power by the converter 19, be directly supplied to the ammonia producing device 2 without being passed through the inverter 20.

Provided between the first exhaust pipe L1 and a second exhaust pipe L2 connected to an outlet side of the turbine unit 5a of the hybrid turbocharger 5 is a bypass pipe L1' for bypassing the Hybrid turbocharger 5. In the bypass pipe L1', an exhaust gas bypass control valve V1 and an orifice 14 are provided.
The exhaust gas bypass control valve V1 controls a flow rate of exhaust gas toward the hybrid turbocharger 5. Specifically, when the exhaust gas bypass control valve V1 is fully closed, an entire flow rate of exhaust gas from an exhaust pipe L1 is supplied to the hybrid turbocharger 5. As the opening degree of exhaust gas bypass control valve V1 increases, the flow rate of exhaust gas is increasingly diverted from the exhaust pipe L1 to the bypass pipe L1'. Thus, the flow rate of exhaust gas toward the hybrid turbocharger 5 is controlled using the exhaust gas bypass control valve V1. The opening degree of the exhaust gas bypass control valve V1 is controlled by a control unit not illustrated in the drawings.

The orifice 14 is installed on a downstream side of the exhaust gas bypass control valve V1 and serves to prevent a large amount of exhaust gas flowing in the bypass pipe L1' when the exhaust gas bypass control valve V1 is fully open so that exhaust gas is supplied to the hybrid turbocharger 5.
Note that while an example in which the orifice 14 is provided is described for this embodiment, there is no requirement to provide the orifice 14.

In the marine vessel system 30, a first electric power generating diesel engine 61 including an electric power generator 62, and a second electric power generating diesel engine 63 including an electric power generator 64 are connected in parallel.
The marine vessel system 30 is connected to the ammonia producing device 2 and a later-described electric heater 73, and electric power is supplied to the ammonia producing device 2 and the electric heater 73.

The exhaust gas economizer 11 is connected to the second exhaust pipe L2, and exhaust gas discharged from the main engine 3 and water supplied by a water supply pipe 23 are heat exchanged so as to generate steam. On an upstream side of the exhaust gas economizer 11, an exhaust gas economizer on-off valve 22 that controls the flow of the exhaust gas is provided. A switching timing for the exhaust gas economizer on-off valve 22 is determined by a control unit not illustrated in the drawings.

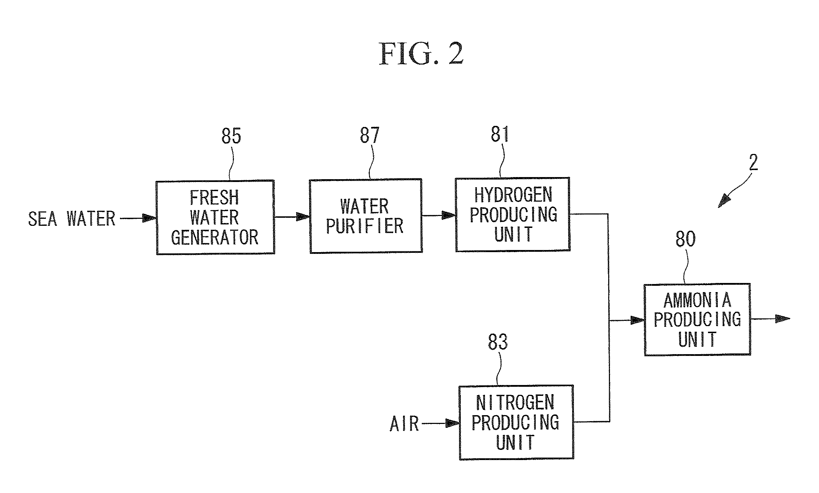

The marine vessel denitration system 1 includes the ammonia producing device 2 and an SCR catalyst unit 4 used for a selective catalytic reduction (SCR). The ammonia producing device 2 and the SCR catalyst unit 4 are connected to the second exhaust pipe L2, the ammonia producing device 2 being installed on the upstream side of the exhaust gas flow and the SCR catalyst unit 4 on the downstream side.
As illustrated in FIG. 2, the ammonia producing device 2 includes a hydrogen producing unit 81 that produces hydrogen from water, a nitrogen producing unit 83 that produces nitrogen from air, and an ammonia producing unit 80 that generates ammonia from the hydrogen and the nitrogen.
For the water used in the hydrogen producing unit 81, pure water is used. Fresh water is produced from sea water using a water maker 85 mounted on the marine vessel and the fresh water is purified to pure water using a water purifier 87 mounted on the marine vessel. The hydrogen producing unit 81 uses a solid-state polymer electrolyte film method whereby an ion exchange film is used as an electrolyte to electrolyze pure water. The hydrogen produced by the hydrogen producing unit 81 is treated to remove moisture in a hydrogen drier (not illustrated in the drawings) and then fed to the ammonia producing unit 80.
In the nitrogen producing unit 83, nitrogen is produced from air using a Pressure Swing Adsorption (PSA) method or the like. The nitrogen produced by the nitrogen producing unit 83 is fed to the ammonia producing unit 80.
In the ammonia producing unit 80, the hydrogen and the nitrogen are mixed and heated, and ammonia is produced with a reaction catalyst such as a ruthenium catalyst.

The ammonia producing device 2 consumes electric power for the electrolysis and the like of the hydrogen producing unit 81. To provide such electric power, electric power from the above-described hybrid electric power generator motor 5c is used.
As illustrated in FIG. 1, the ammonia (gas) produced in the ammonia producing device 2 is supplied directly to the second exhaust pipe L2 via an ammonia producing device on-off valve 24. Thus, the produced ammonia is supplied directly into the exhaust gas without being stored on the way. A switching timing for the ammonia producing device on-off valve 24 is determined by the control unit not illustrated in the drawings.
On the downstream side of the ammonia producing device on-off valve 24, a flow rate sensor S1 for measuring an amount of the ammonia is provided.

The exhaust gas is introduced to the SCR catalyst unit 4 from the second exhaust pipe L2 via an SCR on-off valve 26. A switching timing for the SCR on-off valve 26 is determined by the control unit not illustrated in the drawings. In the SCR catalyst unit 4, the NOx in the exhaust gas is selectively reduced by the catalyst and decomposed into non-hazardous nitrogen and steam.
On the upstream side of the SCR catalyst unit 4, the electric heater 73 is provided for heating the exhaust gas that is to be introduced.

An upstream side density sensor S2 for measuring ammonia density is provided between the electric heater 73 and the SCR catalyst unit 4. Further, a downstream side density sensor S3 for measuring ammonia density is provided on the downstream side of the SCR catalyst unit 4. Note that any one of the density sensors S2 and S3 and the above-described flow rate sensor S1 may be used or an appropriate combination of the sensors may be used.

The SCR on-off valve 26 and the exhaust gas economizer on-off valve 22 are opened and closed alternately. Specifically, when it is necessary to perform denitration of the exhaust gas, such as when the marine vessel is operating in areas where exhaust gas NOx regulations are strict (Emission Control Areas; hereinafter referred to as "ECA"), the SCR on-off valve 26 is opened and the exhaust gas economizer on-off valve 22 is closed. On the other hand, when it is not necessary to perform denitration of the exhaust gas, such as when the marine vessel is operating in areas where exhaust gas NOx regulations are relatively light (outside ECA), the SCR on-off valve 26 is closed and the exhaust gas economizer on-off valve 22 is opened.
Note that the SCR on-off valve 26 and the exhaust gas economizer on-off valve 22 may be replaced with a three-way valve.

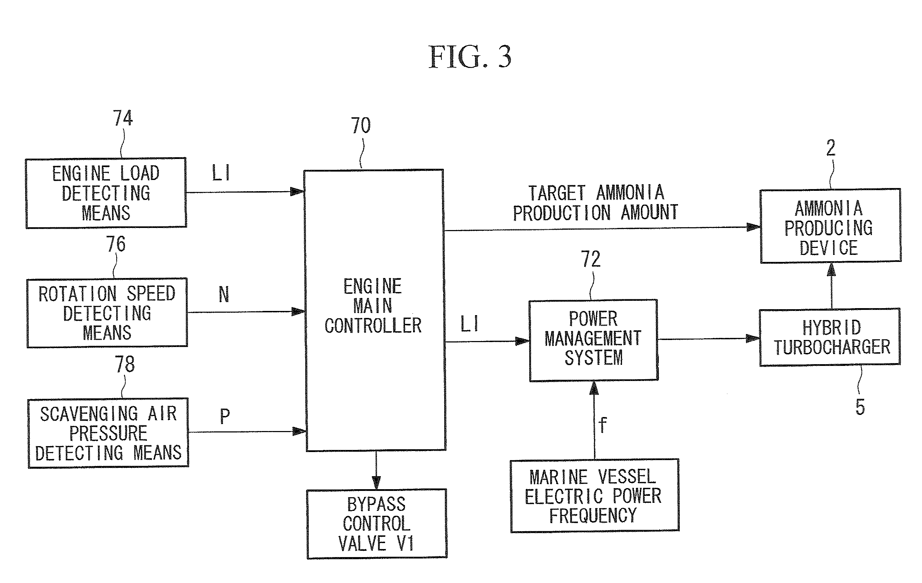

FIG. 3 is a block diagram of when the control unit that controls the entire marine vessel controls the above-described marine vessel denitration system 1. The control unit includes an engine main controller 70, and a power management system (electric power output control unit; hereinafter referred to as "PMS") 72.

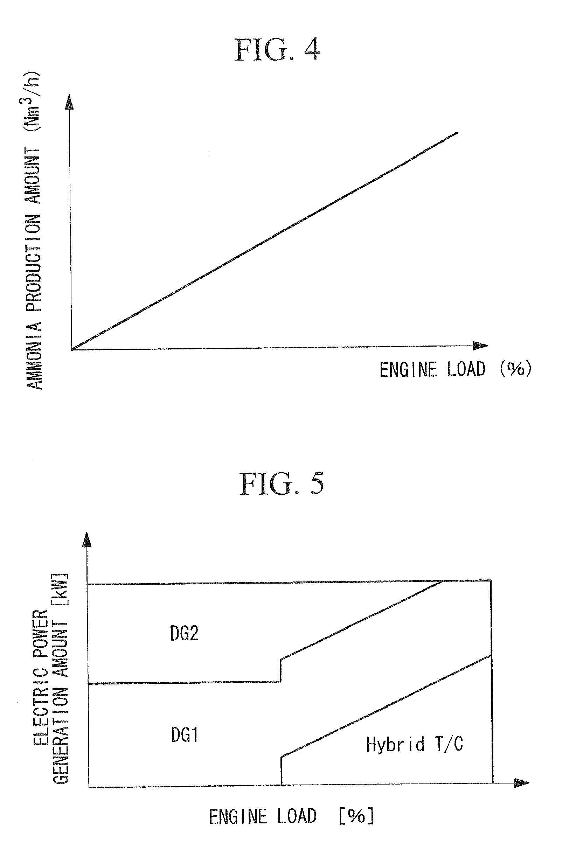

The engine main controller 70 controls the main engine 3. The engine main controller 70 receives an engine load signal LI from an engine load detecting means 74, engine rotation speed N from a rotation speed detecting means 76 that detects a rotation speed of the main engine 3, and a scavenging air pressure P from a scavenging air pressure detecting means 78 that detects scavenging air pressure within the exhaust manifold 15 of the main engine 3.
The engine main controller 70 performs a predetermined calculation based on the above-described input signals to determine the target ammonia production amount required for denitration of the exhaust gas. Specifically, the engine main controller 70 also functions as a calculating means for a target ammonia production amount. The graph shown in FIG. 4 is used for the calculation of the target ammonia production amount. Equations for the graph or a digitized database of the graph is stored in advance in a storage unit of the engine main controller 70. In FIG. 4, the horizontal axis represents engine load (%) determined from the engine load signal LI and the vertical axis represents ammonia production amount (Nm³/h). As shown in FIG. 4, the ammonia production amount increases monotonically with engine load. Note that the graph in FIG. 4 is an example and will be appropriately determined according to characteristics of the main engine. The engine main controller 70 determines the target ammonia production amount from the engine load signal LI obtained from the engine load detecting means 74 based on the graph in FIG. 4. The target ammonia production amount determined as described is transmitted to the ammonia producing device 2.
The engine main controller 70 controls an opening degree of the bypass control valve V1 based on the scavenging air pressure P. By controlling the opening degree of the bypass control pipe V1, the pressure within the exhaust manifold 15 is maintained at or below a predetermined value.

The PMS 72 controls electric power in the marine vessel. The PMS 72 receives the engine load signal LI from the engine main controller 70 and a marine vessel electric power frequency f. The PMS 72 performs a predetermined calculation based on the input signals to determine an electric power generation amount for the hybrid turbocharger 5. To calculate the electric power generation amount for the hybrid turbocharger 5, the mapping shown in FIG. 5 is used. Equations for the mapping or a digitized database of the mapping is stored in advance in the storage unit of the PMS 72.
In FIG. 5, the horizontal axis represents engine load (%) determined from the engine load signal LI and the vertical axis represents a total electric power generation amount (kW). Also, in FIG. 5, "DG1" denotes the electric power generator 62 of the first electric power generating diesel engine 61, "DG2" denotes the electric power generator 64 of the second electric power generating diesel engine 63, and "Hybrid T/C" denotes the electric power generator 5c of the hybrid turbocharger 5. As shown in FIG. 5, when the engine load is low, electric power is generated by the first and second electric power generating diesel engines 61 and 63 alone. When the engine load exceeds a predetermined value, the hybrid turbocharger 5 begins generating electric power, and gradually increases the electric power generation amount as load increases. This arrangement is used because the exhaust energy from the engine is not large enough to allow recovery of exhaust heat until the main engine load exceeds the predetermined value. Note that the mapping in FIG. 5 is an example. The actual mapping will be appropriately determined according to an electric power generating system in the marine vessel.
The electric power generation amount is controlled so that the marine vessel electric power frequency f is constant at a predetermined value. Specifically, if the marine vessel electric power frequency f drops below the predetermined value, the electric power demand in the marine vessel is judged to have increased and the electric power generation amount is increased. If the marine vessel electric power frequency f exceeds the predetermined value, the electric power demand in the marine vessel is judged to have dropped and the electric power generation amount is reduced. When the engine load and the electric power generation amount have been determined in this way, the electric power generation amount of the hybrid turbocharger 5 is determined from the mapping in FIG. 5. The electric power generation amount determined in this way is transmitted to the hybrid turbocharger 5 as a target electric power generation amount to control the inverter 20.

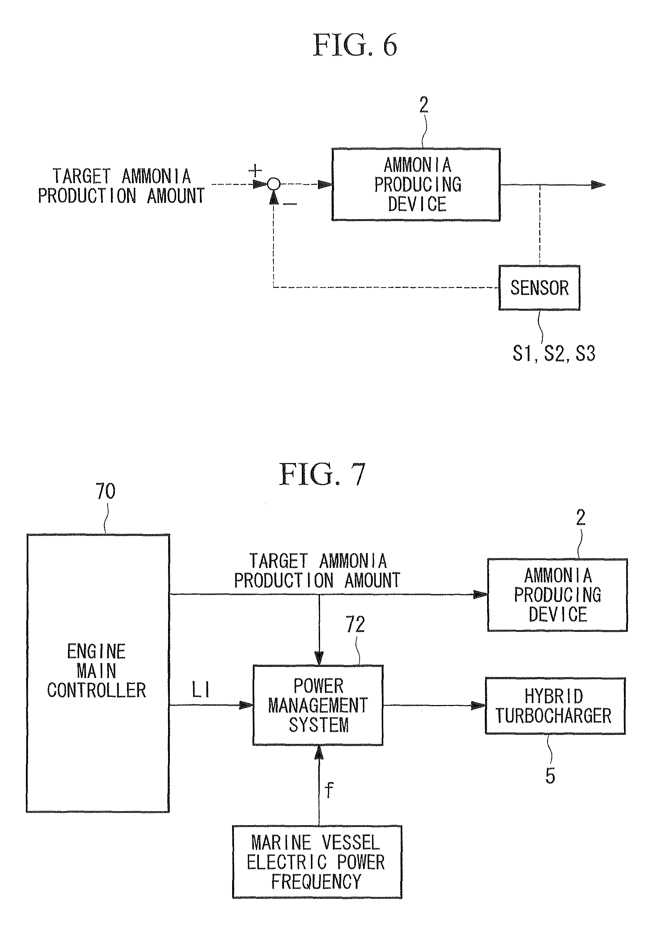

FIG. 6 is a block diagram illustrating a feedback control of the ammonia production amount produced by the ammonia producing device 2 using the target ammonia production amount transmitted from the PMS 72. As illustrated in FIG. 6, the ammonia production amount produced by the ammonia producing device 2 is detected by the sensors S1, S2 and S3. For example, if the flow rate sensor S1 obtains the flow rate of the ammonia and the density during the ammonia production is already known independently, the ammonia production amount can be determined. The upstream side concentration sensor S2 obtains the ammonia density before the ammonia flows into the SCR catalyst unit 4. The downstream side concentration sensor S3 obtains the ammonia density of the ammonia not yet consumed by the SCR catalyst unit 4.
The values measured by the sensors S1, S2 and S3 are compared to the target ammonia production amount, and feedback control is performed. Specifically, feedback control is performed such that the flow rate obtained by the flow rate sensor S1 matches a flow rate corresponding to the target ammonia production amount. Alternatively, feedback control is performed such that the density obtained by the upstream side density sensor S2 matches a density corresponding to the target ammonia production amount. Alternatively, feedback control is performed such that the density obtained by the downstream side density sensor S3 matches a density of the remaining ammonia (such as a value not exceeding a near-zero predetermined value) corresponding to the target ammonia production amount.

Next, a control method for a marine vessel denitration system with the above-described configuration is described.
The exhaust gas discharged from the main engine 3 is guided from the exhaust manifold 15 to the turbine unit 5a of the hybrid turbocharger 5 via the first exhaust pipe L1. The turbine unit 5a obtains the exhaust gas energy and is caused to rotate. The rotation output is transmitted to the compressor unit 5b and the hybrid electric power generator motor 5c via the rotating shaft 5d. With the compressor unit 5b, air taken in (from the atmosphere) is compressed and fed to the intake manifold 17 via the air cooler 18.
With the hybrid electric power generator motor 5c, electric power is generated from the rotation output of the turbine unit 5a and the electric power output is supplied to the marine vessel system 30. The electric power from the hybrid electric power generator motor 5c is fed to the ammonia producing device 2 and used in the electrolysis in the hydrogen producing unit 81, a transfer pump that transfers the intermediate gas and produced ammonia, and the like. Further, the electric power generated using the electric power generating diesel engines 61 and 63 is supplied to the marine vessel system 30 in a similar manner.
In the ammonia producing device 2, ammonia is produced from the hydrogen produced by the hydrogen producing unit 81 and the nitrogen produced by the nitrogen producing unit 83 using the electric power from the hybrid electric power generator motor 5c.

When the marine vessel is operating in an ECA, denitration of the exhaust gas is performed. In this case, the exhaust gas economizer on-off valve 22 is closed, and the ammonia producing device on-off valve 24 and the SCR on-off valve 26 are opened.
The exhaust gas discharged from the turbine unit 5a of the hybrid turbocharger 5 passes through the second exhaust pipe L2, and is mixed with the ammonia (gas) supplied from the ammonia producing device 2. The exhaust gas mixed with the ammonia is introduced to the SCR catalyst unit 4 via the SCR on-off valve 26. If, before being introduced to the SCR catalyst unit 4, the exhaust gas temperature is lower than a predetermined value, the electric heater 73 is turned on by the control unit not illustrated in the drawings and the exhaust gas is heated. On the other hand, if the exhaust gas temperature is equal to or higher than the predetermined value, the electric heater 73 is turned off by the control unit not illustrated in the drawings. The exhaust gas that has passed through the electric heater 73 undergoes denitration in the SCR catalyst unit 4 and is subsequently discharged to the outside from a funnel not illustrated in the drawings.

When the marine vessel is operating outside an ECA, denitration of the exhaust gas is not performed. In this case, the exhaust gas economizer on-off valve 22 is opened, and the ammonia producing device on-off valve 24 and the SCR on-off valve 26 are closed.
Exhaust gas discharged from the turbine unit 5a of the hybrid turbocharger 5 passes through the second exhaust pipe L2 and is introduced to the exhaust gas economizer 11 via the exhaust gas economizer on-off valve 22. In the exhaust gas economizer 11, water supplied from the water supply pipe 23 is heated by the exhaust gas to generate steam. The generated steam is used in various locations within the marine vessel. The exhaust gas discharged from the exhaust gas economizer 11 is discharged to the outside from a funnel not illustrated in the drawings.

As described above, the following effects are provided according to this embodiment.
With the ammonia producing device 2, ammonia can be produced on the marine vessel using water and air as raw materials. Hence, there is no need to provide space on the marine vessel to store a reducing agent such as liquid ammonia (such as ammonia aqueous solution) or urea. Hence, the marine vessel denitration system can be installed on the marine vessel without ensuring a large space.

The electric power output of the hybrid electric power generator motor 5c of the hybrid turbocharger 5 that generates electric power using the exhaust gas from the main engine 3 is supplied to the ammonia producing device 2. As a result, the ammonia producing device 2 can be operated with a low energy consumption. Also, the exhaust energy from the main engine 3 can be used effectively and so it is possible to avoid increasing the capacity or a number of separately provided electric power generating auxiliary engines, such as diesel engine electric power generators.

In the engine main controller 70, the target ammonia production amount required for exhaust gas denitration is calculated based on the load of the main engine 3 (see FIG. 4), and feedback control is performed on the ammonia producing device 2 so that the produced amount reaches the target ammonia production amount. Hence, an appropriate amount of ammonia in accordance with the load of the main engine 3 can be produced at any time. Thus, since an excessive amount of ammonia is never produced, electric power is not consumed wastefully.

In the PMS 72, the electric power output of the hybrid electric power generator motor 5c is controlled based on the load of the main engine 3. Hence, the exhaust energy can be appropriately recovered as electric power output in accordance with the load of the main engine 3.

The exhaust gas temperature flowing into the SCR catalyst unit 4 can be increased using the electric heater 73. Hence, deterioration of the SCR catalyst can be prevented. Further, the electric heater 73 uses electric power generated through recovery of the heat of the exhaust gas from the main engine 3. Hence, the electric power can be supplied with saving energy.

### (Variation of the First Embodiment)

Control of the electric power output by the PMS 72 was described as being performed so as to maintain the marine vessel electric power frequency f at a constant value as illustrated in FIG. 3, but feedforward control as described below may be added.
As illustrated in FIG. 7, the target ammonia production amount outputted from the engine main controller 70 is inputted to the PMS 72. In the PMS 72, a required electric power corresponding to the target ammonia production amount is calculated. Then, the PMS 72 calculates an electric power generation amount to be generated by the hybrid turbocharger 5 from FIG. 5 is found using an electric power generation amount to which the required electric power has been added. The target electric power generation amount found in this way is transmitted to the hybrid turbocharger 5. Thus, feedforward control based on the target ammonia production amount is performed on the electric power generation amount, thereby enabling a stable electric power supply.

### (Second Embodiment)

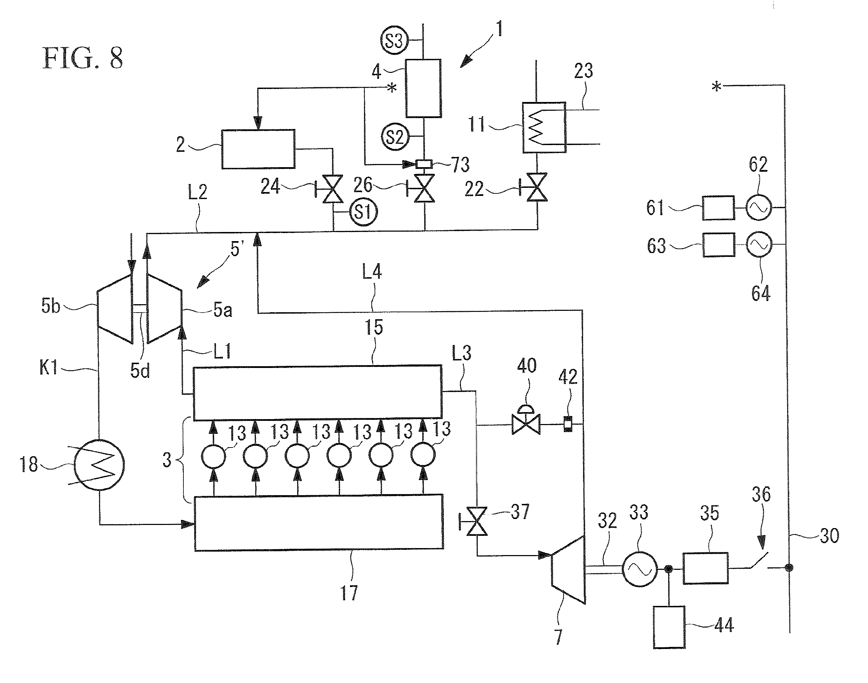

Next, a second embodiment of the present invention will be described using FIG. 8 to FIG. 10. In the above-described first embodiment, the electric power output from the hybrid turbocharger 5 (see FIG. 1) is connected to the marine vessel system 30 and used in the denitration system. This embodiment differs in that the electric power output from a power turbine (gas turbine) is connected to the marine vessel system 30 and used in the denitration system. Accordingly, the same reference signs are used for other common constituents and repetitious descriptions are omitted.

The hybrid turbocharger 5 (see FIG. 1) of the first embodiment is replaced with an exhaust turbocharger 5' as illustrated in FIG. 8. The turbine unit 5a driven by the exhaust gas and the compressor unit 5b that compresses air are the same as in the first embodiment.

A third exhaust pipe L3 is connected to the exhaust manifold 15, and exhaust gas from the main engine 3 is guided to an inlet side of a power turbine 7 via the third exhaust pipe L3. Thus, before the exhaust gas from the main engine 3 is supplied to exhaust turbocharger 5', a portion of the exhaust gas from the main engine 3 is bled off and supplied to the power turbine 7. The power turbine 7 is driven to rotate by the bled exhaust gas.
Exhaust gas discharged from an outlet side of the power turbine 7 is guided to the second exhaust pipe L2 via a fourth exhaust pipe L4.

Rotation output from the power turbine 7 is transmitted to 3 the electric power generator connected to the power turbine 3 via a rotational shaft 32. Electric power generated by the electric power generator connected to the power turbine 33 is supplied to the marine vessel system 30 via the frequency converter 35 and the on/off switch 36. Accordingly, the electric power output from the electric power generator connected to the power turbine 33 is supplied to the ammonia producing device 2.
A load bank 44 is provided between the electric power generator connected to the power turbine 33 and the frequency converter 35. For the load bank 44, a load resistance device is used. The load bank 44 is used to consume excessive electric power from the electric power generator connected to the power turbine 33 and thereby reduce fluctuation in the output.

An exhaust gas flow adjusting valve 37 for controlling an amount of gas introduced into the power turbine 7 is provided in the third exhaust pipe L3. A bypass valve 40 and an orifice 42 are provided between the third exhaust pipe L3 and the fourth exhaust pipe L4 to prevent over charging of the turbine unit 5a of the exhaust turbocharger 5' (charging that exceeds the optimal operating pressure of the engine) when the exhaust gas flow adjusting valve 37 is shut off.

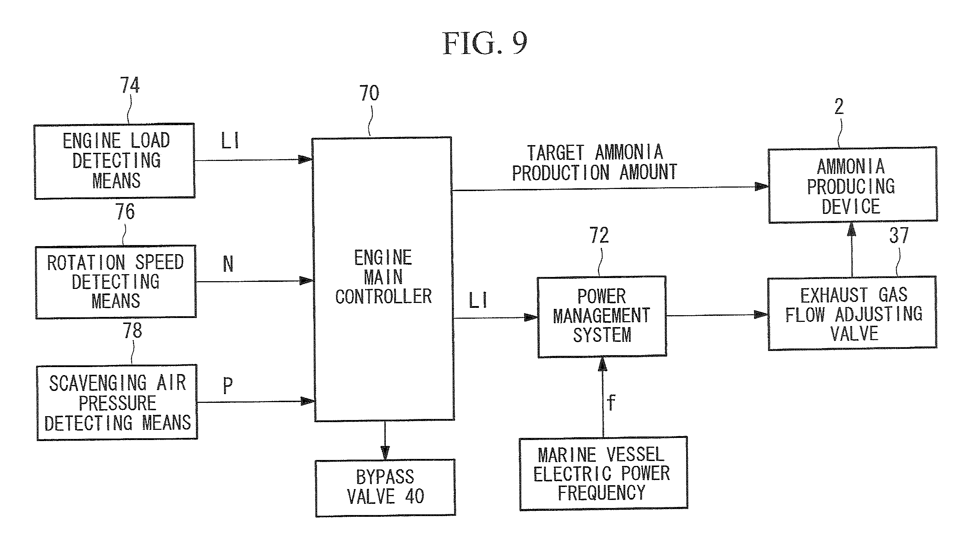

In the above-described configuration, the opening degree of the bypass valve 40 is, as illustrated in FIG. 9, controlled by the engine main controller 70 in order to maintain the pressure in the exhaust manifold 15 at or below a predetermined value.

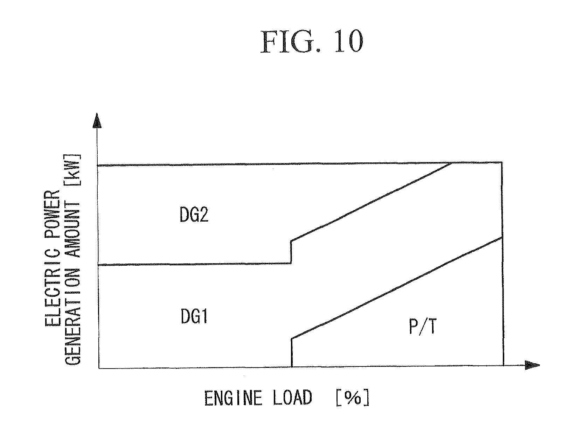

In this embodiment, in which exhaust heat is recovered using the power turbine 7 and electric power is generated using the electric power generator connected to the power turbine 33 (P/T) as illustrated in FIG. 10 (corresponding to FIG. 5 of the first embodiment), electric power generation using the power turbine 7 is started when the load of the main engine 3 is equal to or higher than a predetermined value with the electric power generation amount being steadily increased as the load increases. This arrangement is used because the exhaust energy from the engine is not large enough to allow recovery of exhaust heat until the load of the main engine exceeds the predetermined value. Note that the mapping in FIG. 10 is an example. The actual mapping will be appropriately determined according to the electric power generating system in the marine vessel.
The target electric power generation amount for the electric power generator connected to the power turbine 33, as obtained based on FIG. 10, is controlled by the opening degree of the exhaust gas flow adjusting valve 37, as illustrated in FIG. 9.

According to this embodiment, the following effects are provided in addition to the effects of the first embodiment.
The electric power output from the electric power generator connected to the power turbine 33 that generates electric power using the power turbine 7 driven by the exhaust gas from the main engine 3 is used in the ammonia producing device 2 via the marine vessel system 30. Hence, the exhaust energy from the main engine 3 can be used effectively.
Note that feedforward control of the electric power generation amount, as illustrated in FIG. 7, may be performed in this embodiment in the same way as in the first embodiment.

Further, the exhaust turbocharger 5' may be replaced with a turbocharger with variable capacity. Examples of turbochargers with variable capacity include a variable nozzle turbocharger with Variable Geometry (VG) turbo or the like, a turbocharger in which a flow area of an exhaust gas passage leading to a fixed turbine nozzle changes, and a turbocharger system including a plurality of turbochargers of differing capacities with the number of the turbochargers being operated being variable. Use of a variable capacity turbocharger allows operation under suitable conditions in accordance with the scavenging air pressure in the exhaust manifold 15 (such as conditions under which fuel consumption rate is optimal). This arrangement is particularly effective when the scavenging air pressure is varied according to the opening degree of the exhaust gas flow adjusting valve 37 and the bypass valve 40. Further, when the marine vessel is operating outside ECA, electric power for the ammonia producing device 2 is not required. Hence, the marine vessel can be operated with conditions selected so that the fuel consumption rate is optimal by reducing the required electric power.

### (Third Embodiment)

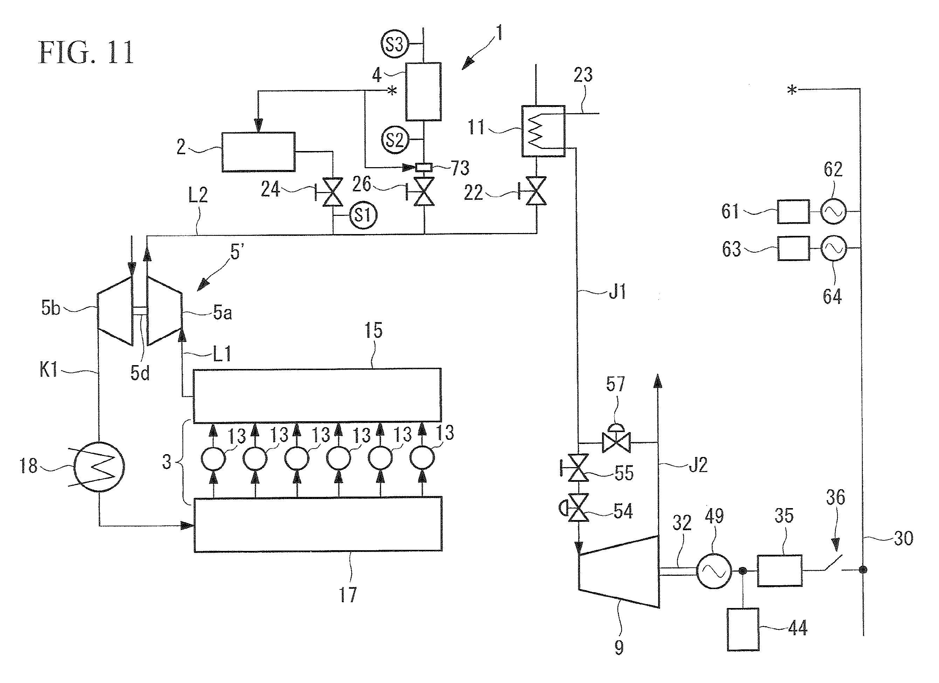

Next, a third embodiment of the present invention will be described using FIG. 11 to FIG. 13. In the above-described first embodiment, the electric power output from the hybrid turbocharger 5 (see FIG. 1) is connected to the marine vessel system 30 and used in the denitration system. This embodiment differs in that the electric power output from a steam turbine is connected to the marine vessel system 30 and used in the denitration system. Accordingly, the same reference signs are used for other common constituents and repetitious descriptions are omitted.

The hybrid turbocharger 5 (see FIG. 1) of the first embodiment is replaced with an exhaust turbocharger 5' as illustrated in FIG. 11. The turbine unit 5a driven by the exhaust gas and the compressor unit 5b that compresses air are the same as in the first embodiment.

As illustrated in FIG. 11, a steam turbine 9 is driven to rotate by steam generated by the exhaust gas economizer 11 and supplied via a first steam pipe J1.
The exhaust gas economizer 11 receives exhaust gas discharged from the outlet side of the turbine unit 5a of the exhaust turbocharger 5' via the second exhaust pipe L2. Steam generated by the exhaust gas economizer 11 is introduced to the steam turbine 9 via the first steam pipe J1. After being used in the steam turbine 9, the steam is discharged using the second steam pipe J2 and guided to a condenser not illustrated in the drawings.

Rotation output from the steam turbine 9 is transmitted to 4 the electric power generator connected to the steam turbine 9 via a rotational shaft 52. Electric power generated by the electric power generator connected to the steam turbine 49 is supplied to the marine vessel system 30 via the frequency converter 35 and the on/off switch 36. Accordingly, the electric power output from the electric power generator connected to the steam turbine 49 is supplied to the ammonia producing device 2.

The first steam pipe J1 is provided with a steam flow adjusting valve 54 for controlling an amount of steam introduced to the steam turbine 9 and an emergency shut-off valve 55 to shut off the supply of steam to the steam turbine 9 in an emergency. A steam bypass valve 57 is provided between the first steam pipe J1 and the second steam pipe J2 to adjust the flow rate of steam bypassing the steam turbine 9.

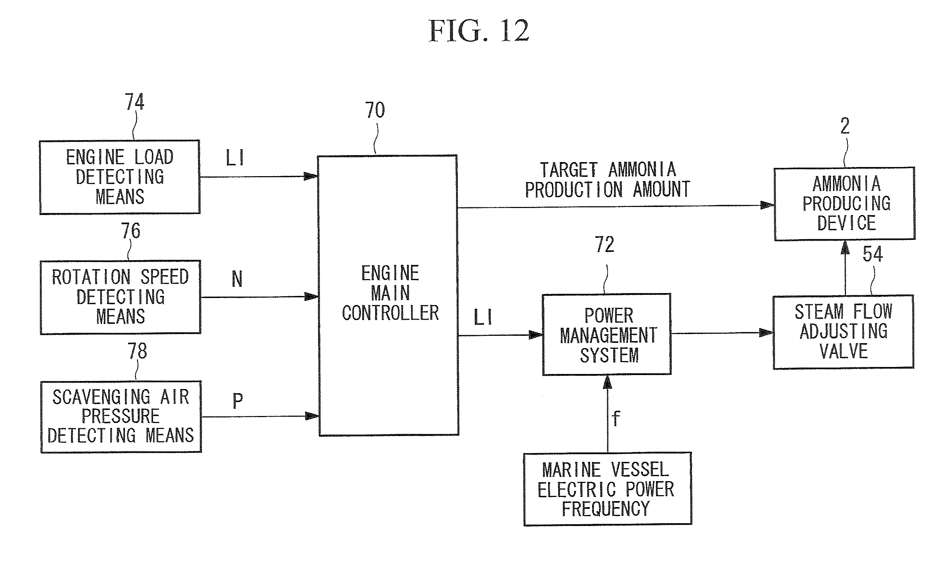

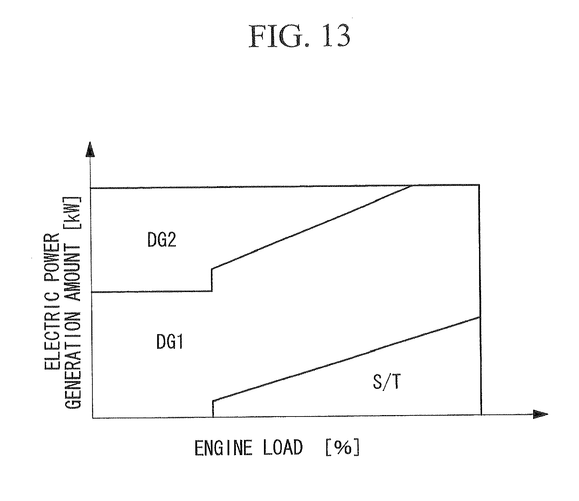

In this embodiment, in which exhaust heat is recovered using the steam turbine 9 and electric power is generated using the electric power generator connected to the steam turbine 49 (S/T) as illustrated in FIG. 13 (corresponding to FIG. 5 of the first embodiment), electric power generation using the steam turbine 9 is started when the load of the main engine 3 is equal to or higher than a predetermined value, with the electric power generation amount being steadily increased as the load increases. This arrangement is used because the exhaust energy from the engine is not large enough to allow recovery of exhaust heat until the load of the main engine exceeds the predetermined value. Note that the mapping in FIG. 13 is an example. The actual mapping will be appropriately determined according to the electric power generating system in the marine vessel.
The target electric power generation amount for the electric power generator connected to the steam turbine 49, as obtained based on FIG. 13, is controlled by the opening degree of the steam flow adjusting valve 54, as illustrated in FIG. 12.

According to this embodiment, the following effects are provided in addition to the effects of the first embodiment and the second embodiment.
Electric power is generated by the steam turbine 9 driven by steam generated by the exhaust gas economizer 11 using the exhaust gas from the main engine 3. Hence, the exhaust energy from the main engine 3 can be used more effectively.
Note that feedforward control of the electric power generation amount, as illustrated in FIG. 7, may be performed in this embodiment in the same way as in the first embodiment.

Further, the exhaust turbocharger 5' may be replaced with a turbocharger with variable capacity. Examples of turbochargers with variable capacity include a variable nozzle turbocharger with Variable Geometry (VG) turbo or the like, a turbocharger in which a flow area of an exhaust gas passage leading to a fixed turbine nozzle changes, and a turbocharger system including a plurality of turbochargers of differing capacities with the number of the turbochargers being operated being variable. Use of a variable capacity turbocharger allows the marine vessel to be operated under suitable conditions in accordance with the scavenging air pressure in the exhaust manifold 15 (such as conditions under which fuel consumption rate is optimal). When the marine vessel is operating outside ECA, electric power for the ammonia producing device 2 is not required. Hence, the marine vessel can be operated with conditions selected so that the fuel consumption rate is optimal by reducing the required electric power.

### (Fourth Embodiment)

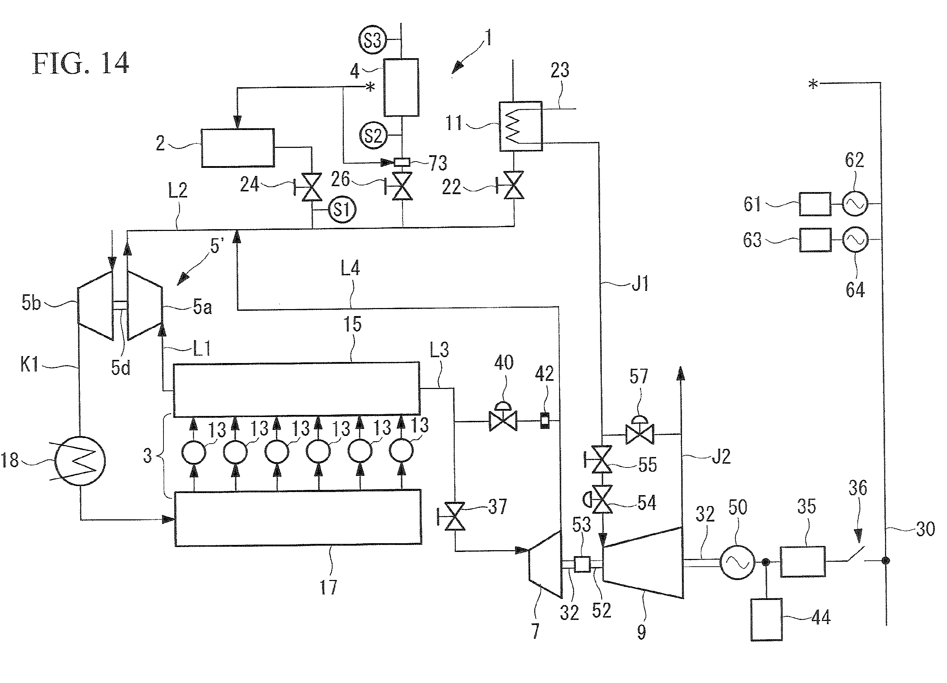

Next, a fourth embodiment of the present invention will be described using FIG. 14 to FIG. 16. In the above-described second embodiment, the electric power output from the power turbine 7 (see FIG. 8) was connected to the marine vessel system 30 and used in the denitration system. This embodiment differs in that the electric power output from a power turbine and a steam turbine is connected to the marine vessel system 30 and used in the denitration system. Accordingly, the same reference signs are used for other common constituents and repetitious descriptions are omitted.

As illustrated in FIG. 14, the steam turbine 9 is driven to rotate by steam generated by the exhaust gas economizer 11 and supplied via the first steam pipe J1.
The exhaust gas economizer 11 receives exhaust gas discharged from the outlet side of the turbine unit 5a of the exhaust turbocharger 5' via the second exhaust pipe L2, and exhaust gas discharged from the outlet side of the power turbine 7 via a fourth exhaust pipe L4. Steam generated by the exhaust gas economizer 11 is introduced to the steam turbine 9 via the first steam pipe J1. After being used in the steam turbine 9, the steam is discharged using the second steam pipe J2 and guided to the condenser not illustrated in the drawings.

The power turbine 7 and the steam turbine 9 are coupled in series to drive an electric power generator connected to the combined turbine 50. In other words, the electric power generator 50 has different types (heterogeneous) of turbine, such as the power turbine 7 and the steam turbine 9, connected on the same shaft. Electric power generated by the electric power generator connected to the combined turbine 50 is supplied to the marine vessel system 30 via the frequency converter 35 and the on/off switch 36. Accordingly, the electric power output from the electric power generator connected to the combined turbine 50 is supplied to the ammonia producing device 2.

A rotational shaft 52 of the steam turbine 9 is connected to the electric power generator connected to the combined turbine 50 via a reduction gear and a coupling not illustrated in the drawings. The rotational shaft 32 of the power turbine 7 is coupled to the rotational shaft 52 of the steam turbine 9 via a reduction gear not illustrated in the drawings and a clutch 53. For the clutch 53, a clutch that engages and disengages at predetermined speeds, such as a Synchro-Self-Shifting (SSS) clutch is favorably used.

The first steam pipe J1 is provided with a steam flow adjusting valve 54 for controlling an amount of steam introduced to the steam turbine 9 and an emergency shut-off valve 55 to shut off the supply of steam to the steam turbine 9 in an emergency. A steam bypass valve 57 is provided between the first steam pipe J1 and the second steam pipe J2 to adjust the flow rate of steam bypassing the steam turbine 9.

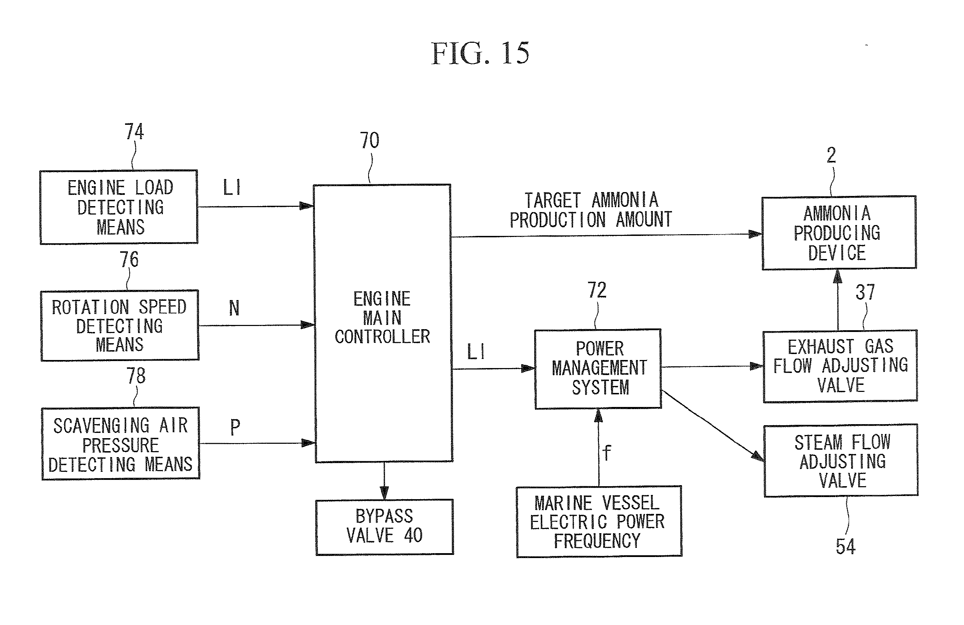

In the above-described configuration, the opening degree of the bypass valve 40 is, as illustrated in FIG. 15, controlled by the engine main controller 70 in order to maintain the pressure in the exhaust manifold 15 at or below a predetermined value.

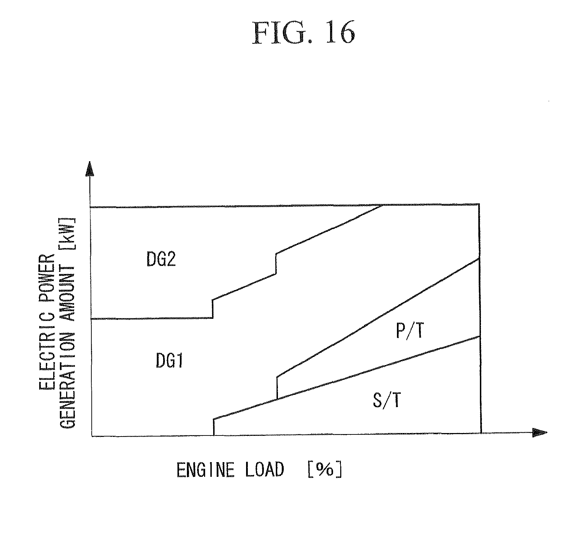

In this embodiment, in which exhaust heat is recovered using the power turbine 7 and the steam turbine 9 and electric power is generated using the electric power generator connected to the combined turbine 50 as illustrated in FIG. 16 (corresponding to FIG. 5 of the first embodiment), electric power generation using the steam turbine 9 is started when the load of the main engine 3 is equal to or higher than a predetermined value and electric power generation using the power turbine 7 is started when the load of the main engine 3 has further increased. The electric power generation amount is then steadily increased as the load increases. This arrangement is used because the exhaust energy from the engine is not large enough to allow recovery of exhaust heat until the load of the main engine exceeds the predetermined value. Note that the mapping in FIG. 16 is an example. The actual mapping will be appropriately determined according to the electric power generating system in the marine vessel.
The target electric power generation amount for the electric power generator connected to the combined turbine 50, as obtained based on FIG. 16, is controlled by the opening degree of the exhaust gas flow adjusting valve 37 and the steam flow adjusting valve 54, as illustrated in FIG. 15.

According to this embodiment, the following effects are provided in addition to the effects of the first embodiment and the second embodiment.
Electric power is generated by the power turbine 7 driven by the exhaust gas from the main engine 3 and by the steam turbine 9 driven by steam generated by the exhaust gas economizer 11 using the exhaust gas from the main engine 3. Hence, the exhaust energy from the main engine 3 can be used more effectively.
Note that feedforward control of the electric power generation amount, as illustrated in FIG. 7, may be performed in this embodiment in the same way as in the first embodiment.

Further, the exhaust turbocharger 5' may be replaced with a turbocharger with variable capacity. Examples of turbochargers with variable capacity include a variable nozzle turbocharger with Variable Geometry (VG) turbo or the like, a turbocharger in which a flow area of an exhaust gas passage leading to a fixed turbine nozzle changes, and a turbocharger system including a plurality of turbochargers of differing capacities with the number of the turbochargers being operated being variable. Use of a variable capacity turbocharger allows operation under suitable conditions in accordance with the scavenging air pressure in the exhaust manifold 15 (such as conditions under which fuel consumption rate is optimal). This arrangement is particularly effective when the scavenging air pressure is varied according to the opening degree of the exhaust gas flow adjusting valve 37 and the bypass valve 40. Further, when the marine vessel is operating outside ECA, electric power for the ammonia producing device 2 is not required. Hence, the marine vessel can be operated with conditions selected so that the fuel consumption rate is optimal by reducing the required electric power.

### (Fifth Embodiment)

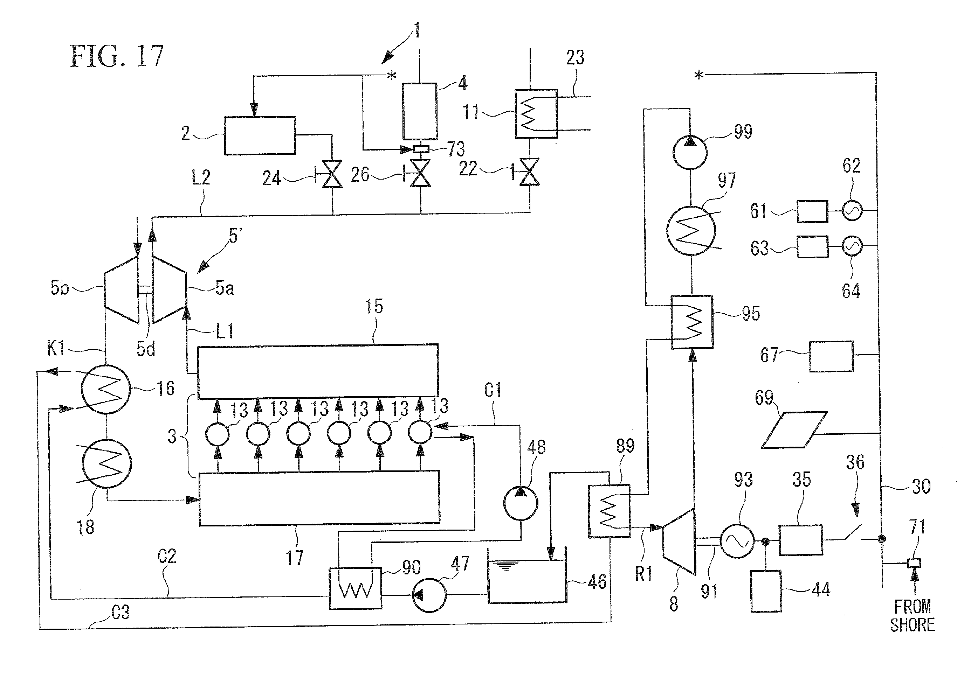

Next, a fifth embodiment of the present invention will be described using FIG. 17 to FIG. 19. In the above-described fourth embodiment, the electric power output from the power turbine 7 and the steam turbine 9 (see FIG. 14) is connected to the marine vessel system 30 and used in the denitration system. This embodiment differs in that the electric power output from a heat transmitting medium turbine is connected to the marine vessel system 30 and used in the denitration system. Accordingly, the same symbols are used for other common constituents and repetitious descriptions are omitted.

As illustrated in FIG. 17, a jacket water heat exchanger 90 is provided in a second cooling water pipe C2. Jacket water circulated through a first cooling water pipe C1 and a cylinder unit 13 by a circulation pump 48 is introduced to the jacket water heat exchanger 90, thereby heating cooling water introduced from a cooling water tank 46.
Cooling water pumped from the cooling water tank 46 by a circulation pump 47 and heated in stages by being passed through a second air cooler 16 via the heat exchanger 90 and the second cooling water pipe C2 is introduced to a heat exchanger 89 by a third cooling water pipe C3.
A heat transmitting medium turbine 8 is driven to rotate by supplying the heating medium vaporized by the heat exchanger 89 via a first heating medium pipe R1. After being used in the heat transmitting medium turbine 8, the vaporized heating medium undergoes heat exchange with low-temperature heating medium in an economizer 95, and is then condensed in a condenser 97 and recirculated into the system by a circulation pump 99.
In the configuration of FIG. 17, the heating medium undergoes heat exchange with cooling water that has passed through the jacket water heat exchanger 90 and the second air cooler 16. Note, however, that a configuration in which the heating medium undergoes heat exchange with water heated by heat exchange with the exhaust gas from the engine is also possible.

Rotation output from the heat transmitting medium turbine 8 is transmitted to an electric power generator connected to the heat transmitting medium turbine 93 via a rotational shaft 91. Electric power generated by the electric power generator connected to the heat transmitting medium turbine 93 is supplied to the marine vessel system 30 via the frequency converter 35 and the on/off switch 36. Accordingly, the electric power output from the electric power generator connected to the heat transmitting medium turbine 93 is supplied to the ammonia producing device 2.

According to this embodiment, the following effects are provided in addition to the effects of each of the above-described embodiments.
The electric power output from the electric power generator connected to the heat transmitting medium turbine 93 that generates electric power using the heat transmitting medium turbine 8 driven by the heating medium vaporized through heat exchange with cooling water of the diesel engine 3 is used in the ammonia producing device 2 via the marine vessel system 30. Hence, the low-temperature exhaust energy from the diesel engine 3 can be used effectively.

In the above-described configuration, an electric power generation amount generated by the electric power generator connected to the heat transmitting medium turbine 93 (ORC) is always set at the maximum possible level. When the electric power supply amount is insufficient to satisfy the demand on the marine vessel system 30, load control is performed on the first and/or second electric power generating diesel engines 61 and 63.

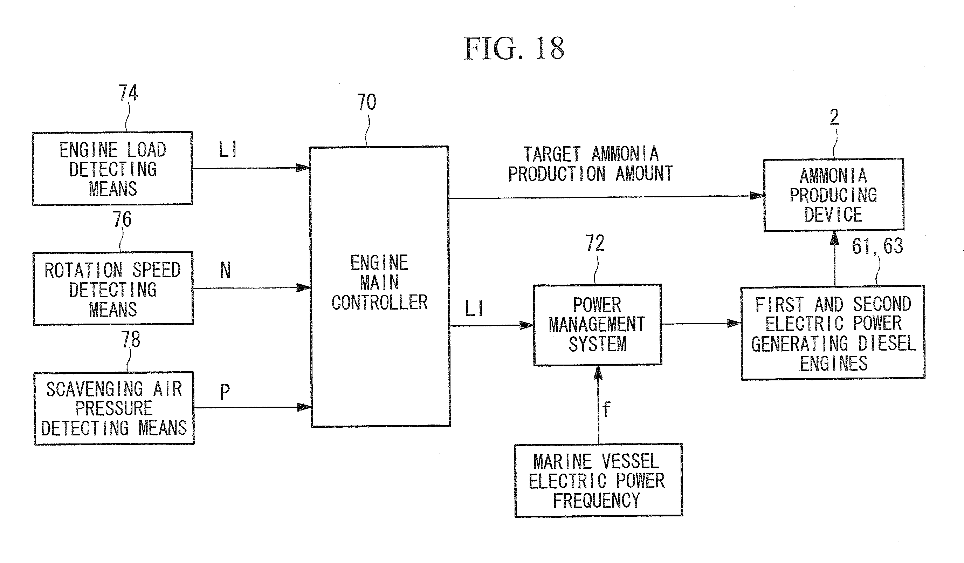

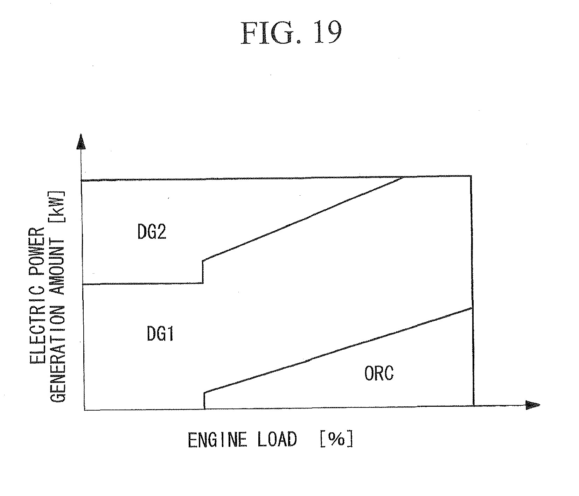

In this embodiment, in which waste heat of exhaust gas is recovered using the heat transmitting medium turbine 8 and electric power is generated using the electric power generator connected to the heat transmitting medium turbine 93 as illustrated in FIG. 19, electric power generation using the heat transmitting medium turbine 8 is started when the load of the main engine 3 is equal to or higher than a predetermined value, with the electric power generation amount being steadily increased as the load increases. This arrangement is used because the exhaust energy from the engine cooling water and/or the exhaust energy are not large enough to allow recovery of exhaust heat until the main engine load exceeds the predetermined value. Note that the mapping in FIG. 19 is an example. The actual mapping will be appropriately determined according to the electric power generating system in the marine vessel.
The target electric power generation amount for the first and/or second electric power generating diesel engines 61 and 63, as obtained based on FIG. 19, is controlled using load control commands from the PMS as illustrated in FIG. 18.

**{Reference Signs List}**

| | |
|---|---|
| 1 | Marine vessel denitration system |
| 2 | Ammonia producing device |
| 3 | Main engine |
| 4 | SCR catalyst unit |
| 5 | Hybrid turbocharger |
| 5' | Exhaust turbocharger |
| 5C | Hybrid electric power generator motor (electric power |
| | generator connected to the turbocharger) |
| 7 | Power turbine |
| 8 | Heat transmitting medium turbine |
| 9 | Steam turbine |
| 11 | Exhaust gas economizer (exhaust gas boiler) |
| 30 | Marine vessel electric power system |
| 33 | Electric power generator connected to the power turbine |
| 49 | Electric power generator connected to the steam turbine |
| 50 | Electric power generator connected to the combined turbine |
| 70 | Engine main controller |
| 72 | Power management system (PMS; electric power output control unit) |
| 73 | Electric heater |
| 81 | Hydrogen producing unit |
| 83 | Nitrogen producing unit |
| 93 | Electric power generator connected to the heat transmitting medium turbine |

## Claims

1. A marine vessel denitration system comprising:
an ammonia producing device that includes a hydrogen producing unit for producing hydrogen from water and a nitrogen producing unit for producing nitrogen from air, and that produces ammonia from the hydrogen produced by the hydrogen producing unit and the nitrogen produced by the nitrogen producing unit; and
a denitration catalyst unit that is provided in an exhaust gas passage of a main engine for marine vessel propulsion and performs denitration of the exhaust gas with the ammonia produced by the ammonia producing device,
wherein the marine vessel denitration system comprising
an electric power output control unit that controls, based on a load of the main engine, electric power output of an electric power generator that generates electric power using exhaust energy from the main engine, wherein
at least a portion of the electric power output controlled by the electric power output control unit is used in the ammonia producing device.

2. The marine vessel denitration system according to claim 1, further comprising a calculating means for a target ammonia production amount that calculates a target ammonia production amount to be produced by the ammonia producing device in accordance with the load of the main engine.

3. The marine vessel denitration system according to claim 2, further comprising an ammonia production amount acquiring means that acquires an ammonia production amount produced by the ammonia producing device,
wherein the acquired ammonia production amount acquired by the ammonia production amount acquiring means and the target ammonia production amount are used to perform feedback control of the ammonia production amount produced by the ammonia producing device.

4. The marine vessel denitration system according to claim 3, wherein the ammonia production amount acquiring means includes:
at least one of an ammonia flow rate sensor that detects a flow rate of ammonia produced by the ammonia producing device, an upstream side ammonia density sensor that detects an ammonia density on an upstream side of the denitration catalyst unit, and a downstream side ammonia density sensor that detects an ammonia density on a downstream side of the denitration catalyst unit.

5. The marine vessel denitration system according to claim 2, further comprising a required electric power calculating means for an ammonia producing device for calculating a required electric power for the ammonia producing device from the target ammonia production amount,
wherein the electric power output control unit uses the required electric power found by the required electric power calculating means for an ammonia producing device to perform feedforward control of the electric power output.

6. The marine vessel denitration system according to any one of claims 1 to 5, further comprising an electric heater that heats exhaust gas being introduced to the denitration catalyst unit,
wherein at least a portion of the electric power controlled by the electric power output control unit is used in the electric heater.

7. The marine vessel denitration system according to any one of claims 1 to 6, wherein an electric power generator connected to a turbocharger that generates electric power by obtaining rotation energy of an exhaust turbocharger of the main engine is used as the power generator.

8. The marine vessel denitration system according to any one of claims 1 to 6, wherein an electric power generator connected to a power turbine that generates electric power using a power turbine driven by the exhaust gas from the main engine is used as the electric power generator.

9. The marine vessel denitration system according to any one of claims 1 to 6, wherein an electric power generator connected to a steam turbine that generates electric power using a steam turbine driven by steam generated by an exhaust gas boiler utilizing the exhaust gas from the main engine is used as the electric power generator.

10. The marine vessel denitration system according to any one of claims 1 to 6, wherein an electric power generator connected to a combined turbine that generates electric power using the power turbine driven by exhaust gas from the main engine and the steam turbine driven by steam generated by the exhaust gas boiler utilizing the exhaust gas from the main engine is used as the electric power generator.

11. The marine vessel denitration system according to any one of claims 1 to 6, wherein a heat transmitting medium turbine side electric power generator that generates electric power using a turbine driven by a vaporized heating medium is used as the electric power generator, the heating medium being vaporized through heat exchange with heated water, the heated water being heated by heat exchange with exhaust gas and/or cooling water of a jacket or an air cooler of the main engine.

12. The marine vessel denitration system according to any one of claims 1 to 11, further comprising an exhaust turbocharger driven by exhaust gas from the main engine,
wherein the exhaust turbocharger is of variable capacity.

13. A marine vessel, comprising:
a main engine for marine vessel propulsion; and
the marine vessel denitration system according to any one of claims 1 to 12.

14. A control method for a marine vessel denitration system for controlling a marine vessel denitration system including an ammonia producing device that has a hydrogen producing unit for producing hydrogen from water and a nitrogen producing unit for producing nitrogen from air, and that produces ammonia from the hydrogen produced by the hydrogen producing unit and the nitrogen produced by the nitrogen producing unit, and
a denitration catalyst unit that is provided in an exhaust gas passage of a main engine for marine vessel propulsion and performs denitration of the exhaust gas with the ammonia produced by the ammonia producing device,
wherein the control method for a marine vessel denitration system comprising:
controlling, based on a load of the main engine, electric power output of an electric power generator that generates electric power using exhaust energy from the main engine; and
supplying at least a portion of the electric power output to the ammonia producing device.
